# EUROPEAN PATENT APPLICATION

(11) **EP 3 208 538 A1**
(43) Date of publication of application: **23.08.2017**
(21) Application number: 16156639.3
(22) Date of filing: 22.02.2016
(51) Int. Cl.: F23D 11/36, F23D 14/32, F23D 14/78, C03B 5/235, C03B 7/06

(54) **COOLING UNIT FOR OXY-BURNER**

(71) Applicant: 3B Fibreglass sprl, 4651 Battice (BE)
(72) Inventor: Lecrenier, Pascal, 4651 Battice (BE); Faway, José, 4651 Battice (BE); Vanwynsberghe, Frédéric, 4651 Battice (BE); Lecrenier, Raphael, 4651 Battice (BE)
(74) Representative: BiiP cvba

(57) **Abstract**

The present invention concerns an assembly and a kit of parts comprising:
(a) An **oxy-burner** (1) comprising a body extending along a burner body axis, Xb, and comprising a downstream end ending at a free end of the downstream end, said body enclosing a **fuel line** (1F) and an **oxygen line** (1Ox) separate from the fuel line, both fuel line and oxygen line having a separate outlet at or adjacent to the free end of the downstream end (1 D) of the oxy-burner, wherein a cross-sectional area normal to Xb of said **downstream end** of the oxy-burner body decreases towards the free end of the downstream end;
(b) A cooling unit (3) comprising:
• a **cooling plate** (5) made of a thermally conductive material, defined by a first and a second **main surfaces** separated by a thickness of said cooling plate, and an **aperture** extending from a **large opening** at the first main surface to a **narrow opening** to the second main surface, wherein the aperture is defined by an **aperture wall** which geometry matches the geometry of the downstream end of the oxy-burner to form a **thermal contact** therewith when the downstream end is inserted in the aperture;
• a **cooling channel** (3C) defined by walls and comprising an **inlet** (3U) and an **outlet** (3D) for circulating a refrigerating fluid, wherein a **cooling wall** (5W) of said cooling channel is formed by a portion of the cooling plate.

## Description

### Technical Field

The present invention relates to burners, in particular oxy-burners, used in the front end of a glass fibre manufacturing line for maintaining a glass melt at a desired temperature. In particular, it concerns a cooling unit for keeping an oxy-burner at a temperature below a safety threshold use temperature, regardless of whether the burner or oxy-burner is operational of not.

### Background for the invention

Glass fibre production includes melting a composition of raw materials in a furnace or melter to form a molten glass. The molten glass thus formed is transferred to various fiberization units, generally bushings, through channels and forehearths forming a front end. In the frontend, the molten glass is conditioned and its temperature and pressure controlled before it reaches the bushings where it is formed into fibres and cooled. A front end is formed by one or more passages, which are defined by a first and second opposite longitudinal walls, a ceiling, a bottom floor and an end wall. Bushings are disposed along the bottom floor of the one or more passages.

In order to yield and control a uniform temperature of the molten glass in the frontend, burners are aligned along the first and second opposite longitudinal walls and usually also at the end wall. Oxygen-gas burners, oxygen-fuel burners or, more simply, oxy-burners form a new generation of burners forming a flame from a mixture of oxygen and gaseous fuel, and gradually replace conventional burners using a mixture of fuel and air, as they yield much improved furnace and front end energy efficiency and productivity. It is estimated that oxy-burners significantly reduce natural gas consumption in the overall glass manufacturing process, lowering front end energy usage by up to 70%, compared with conventional air-burners using air-gas firing system. Oxy-burners are described e.g., in WO2003/084885.

It is claimed that oxy-burners can simply replace conventional air-burners in existing front ends. This statement is arguable, because there are at least two differences changing the thermal conditions surrounding an oxy-burner compared with a conventional air-burner. First, the higher flame temperature of an oxy-burner versus a conventional burner must be considered. The flame temperature of a conventional air-gas mixture burner is about 1920-1950°C. By contrast, the flame temperature of an oxy-burner is much higher and can reach values of the order of 2500-2900°C. For this reason, the refractory material of the burner block in which a burner is mounted must be optimized, ensuring that it does not degrade when exposed to higher temperatures. Another issue is the degradation of the burners exposed to higher thermal radiations. In use, the oxygen and fuel flowing through an oxy-burner and mixed at a tip of the oxy-burner act as cooling media, ensuring that the burner's temperature remains below a safety threshold. If for any reason an oxy-burner stops functioning and no more oxygen and/or fuel flows through the burner, the tip of the burner, exposed to the high temperatures reigning in the interior of the front end and of the burner block, may rapidly heat up above a safety threshold temperature and be irreversibly damaged if exposed too long to such temperatures. Considering that a front end may count hundreds of oxy-burners, even if they are controlled at regular intervals, it is nearly impossible to identify a defective oxy-burner before it got irreversibly thermally degraded.

Second, another decisive difference between oxy-burners and conventional air-burners is that oxygen and fuel flow rates in oxy-burners are generally lower in oxy-burners than the corresponding air and fuel flow rates in conventional air-burners. It results that the temperature of the downstream end of an oxy-burner is higher than the one of a conventional air-burner. We have seen supra that if the temperature of the downstream end exceeds a threshold temperature, the burner can be irreversibly damaged. Even without exceeding said threshold temperature, the higher temperature of the downstream end of an oxy-burner can have negative effect on the functioning and service life of an oxy-burner. Indeed, a higher temperature, even if lower than the threshold temperature, may provoke cracking (or degradation) of carbon in the hydrocarbon gaseous fuel. The cracked carbon deposits at the tip of the downstream end of the oxy-burner, thus deviating the trajectory of the flame. A deviation of the flame is certainly undesired, as it changes the thermal conditions in the passage and also heats up the refractory of the burner block supporting the oxy-burner, with corresponding risks of degradation. When this happens, the oxy-burners must be removed from the burner blocks supporting them and the tip of the downstream ends must be cleaned.

The present invention proposes a solution for preventing thermal degradation or dysfunctioning of the oxy-burners mounted in a front end. These and other objects of this invention will be evident when viewed in light of the drawings, detailed description, and appended claims.

### Summary of the invention

The present invention is defined in the appended independent claims. Preferred embodiments are defined in the dependent claims. In particular, the present invention concerns a kit of parts comprising:
(a) An oxy-burner (1) comprising a body extending along a burner body axis, Xb, and comprising a downstream end ending at a free end of the downstream end, said body enclosing a fuel line (1F) and an oxygen line (1Ox) separate from the fuel line, both fuel line and oxygen line having a separate outlet at or adjacent to the free end of the downstream end (1 D) of the oxy-burner, wherein a cross-sectional area normal to Xb of said downstream end of the oxy-burner body decreases towards the free end of the downstream end;
(b) A cooling unit (3) comprising:
   - a cooling plate (5) made of a thermally conductive material, defined by a first and a second main surfaces separated by a thickness of said cooling plate, and an aperture extending from a large opening at the first main surface to a narrow opening to the second main surface, wherein the aperture is defined by an aperture wall which geometry matches the geometry of the downstream end of the oxy-burner to form a thermal contact therewith when the downstream end is inserted in the aperture;
   - a cooling channel (3C) defined by walls and comprising an inlet (3U) and an outlet (3D) for circulating a refrigerating fluid, wherein a cooling wall (5W) of said cooling channel is formed by a portion of the cooling plate.

In one embodiment of the present invention, the cooling plate is massive and the cooling wall is formed by a portion of the first main surface. In this embodiment, the cooling channel preferably comprises an annular cavity portion extending along the burner body axis, Xb, from
- an upstream end closed by an upstream wall pierced by a first and second openings bringing the cavity portion in fluid communication with the inlet and the outlet, to
- a downstream end closed by the cooling wall, wherein said cooling wall surrounds the large opening of the aperture of the cooling plate

The annular cavity portion may define a prismatic passage, which extends along the burner body axis, Xb, and is contiguous with the aperture of the cooling plate. The prismatic passage is preferably so dimensioned as to accommodate a portion of the body of the oxy-burner, with or without contact therewith, and with the downstream end of the oxy-burner in thermal contact with the aperture wall of the cooling plate.

In an alternative embodiment, the cooling plate is hollow, forming a cavity surrounding the aperture and forming part of the cooling channel, said cavity being in fluid communication with both inlet and outlet.

The cooling plate must be made of a material having good thermal conduction. For example, an austenite nickel-chromium-based superalloy, such as Inconel, could be used for the cooling plate.

The kit of parts can also comprise a burner block made of a refractory material and comprising a cold surface and a hot surface opposite the cold surface, the cold surface being fluidly connected to the hot surface by a through-passage extending along a passage axis, Xp. The through passage comprises three portions:
(a) A burner portion, opening at the cold surface, and having a prismatic geometry of cross-section suitable for accommodating the cooling unit with the oxy-burner's downstream end inserted in the aperture of the cooling plate;
(b)A flame portion, opening at the hot surface and converging along the passage axis, Xp; in the direction of the cold surface until meeting
(c) A joining portion, fluidly joining the flame portion to the burner portion.

The burner block is preferably made of a refractory material composed of at least 90 wt.% alumina, preferably of at least 95 wt.% alumina, more preferably of at least 99 wt.%.

For an easier insertion into the masonry of the longitudinal wall, the burner block preferably comprises a hot cuboid portion comprising the hot surface, and a cold cuboid portion comprising the cold surface, wherein the cross-sectional area normal to the passage axis, Xp, of the hot cuboid portion is smaller than the one of the cold cuboid portion. This way, it is impossible for the burner block to protrude out of the longitudinal wall beyond the predefined design restrictions.

The flame portion and the joining portion of the burner block through-passage can have a geometry of revolution around the passage axis, Xp. On the other hand, the geometry of the cross-section normal to the passage axis, Xp, of the burner portion should not be of revolution, in order to prevent a burner from rotating about the passage axis, Xp. The burner portion cross-section may have a polyhedral geometry, preferably rectangular or square. Alternatively, the overall geometry of the burner portion cross-section can be of revolution with respect to xp, but comprising a protrusion or a recess, matching a corresponding recess or protrusion in the oxy-burner or the cooling unit.

The present invention also concerns a burner assembly comprising an oxy-burner sub-assembly consisting of an oxy-burner, and a cooling unit as defined supra, wherein the downstream end of the oxy-burner is in thermal contact with the aperture wall of the cooling plate. The assembly may further comprise a burner block as defined supra, with the oxy-burner sub-assembly being encased in the burner portion of the burner block through-passage.

The present invention also concerns a glass fibre manufacturing plant comprising a front end forming a passage for conveying molten glass and defined by a first and second opposite longitudinal walls, a ceiling, a bottom floor and an end wall. Each longitudinal wall is provided with at least one burner assembly as defined supra comprising an oxy-burner sub-assembly and a burner block, with the hot surface of the burner block forming a portion of the corresponding longitudinal wall. Each longitudinal wall comprises at least two burner assemblies aligned horizontally, the at least two burner assemblies of the first longitudinal wall preferably facing the at least two burner assemblies of the second longitudinal wall in a staggered arrangement. The end wall may also be provided with a burner assembly as discussed supra.

The present invention also concerns the use of a cooling unit as defined supra for cooling a downstream end of an oxy-burner mounted in a front end of a glass fibre manufacturing plant.

### Brief description of the Figures

For a fuller understanding of the nature of the present invention, reference is made to the following detailed description taken in conjunction with the accompanying drawings in which:
**Figure 1****:** shows an embodiment of a cooling unit for oxy-burner according to the present invention.
**Figure 2****:** shows an alternative embodiment of a cooling unit for oxy-burner according to the present invention.
**Figure 3****:** shows yet an alternative embodiment of a cooling unit for oxy-burner according to the present invention.
**Figure 4****:** shows (a) a burner block and (b)-(d) the same burner block supporting an oxy-burner and cooling unit according to Figures 1 to 3.
**Figure 5****:** shows a cut-off, perspective view of a burner block.
**Figure 6****:** shows a burner block with different oxy-burner orientations.
**Figure 7****:** shows a cross-section and a top view of a front end according to the present invention.
**Figure 8****:** shows a preferred embodiment wherein a burner block can be reversibly inserted into a cavity of a longitudinal wall.

### Detailed description of the invention

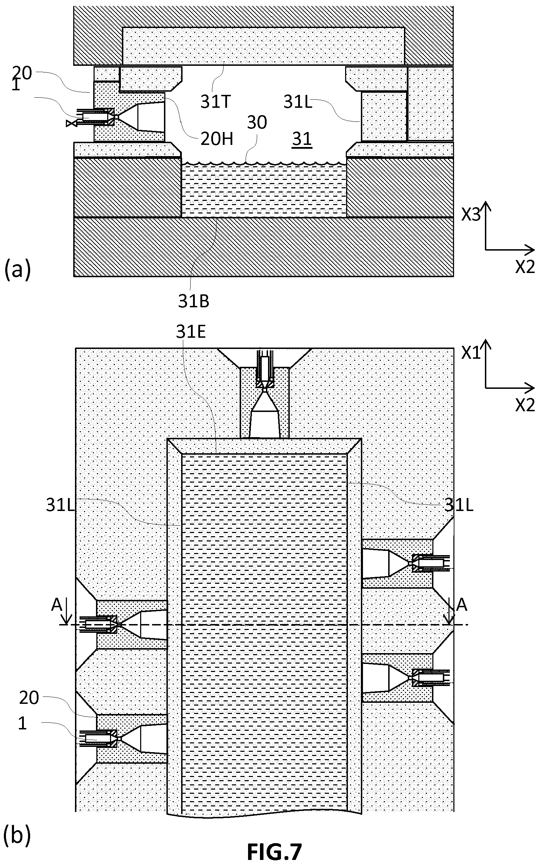

As shown in Figures 7, a glass fibre manufacturing plant suitable for the present invention comprises a front end (31) forming a passage for conveying molten glass (30) and defined by:
- a first and second opposite longitudinal walls (31 L) having a hot longitudinal wall surface facing said passage and extending along a longitudinal direction, X1, having a longitudinal wall thickness extending along a first transverse direction, X2, normal to X1 , and having a longitudinal wall height extending along a second transverse direction, X3, normal to both X1 and X2,
- a ceiling (31T),
- a bottom floor (31 B) and
- an end wall (31 E).

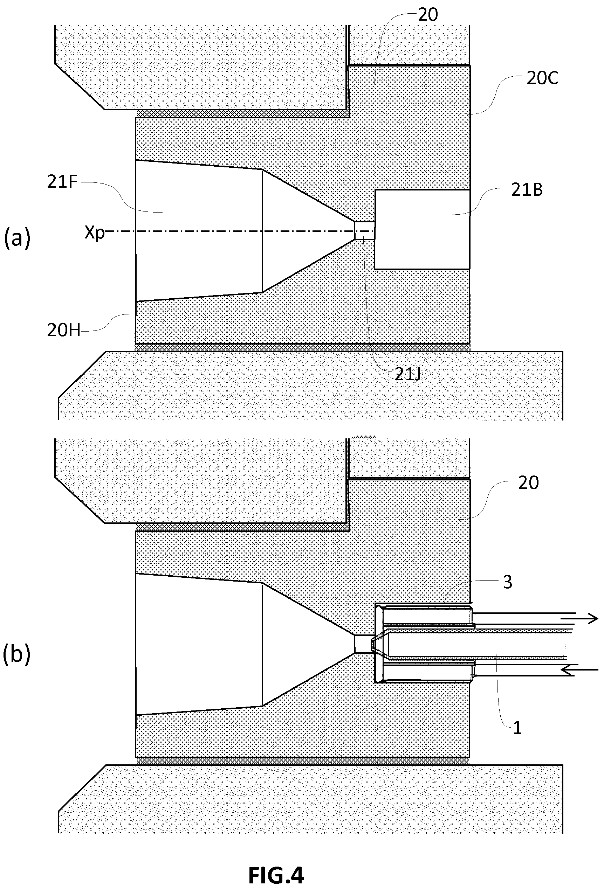

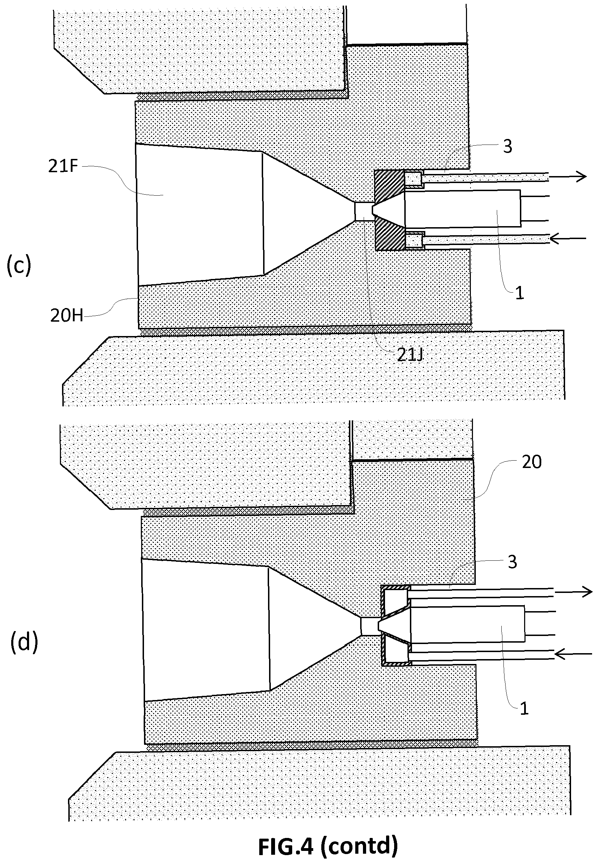

Oxy-burners are mounted in burner blocks (20) included in the masonry of the longitudinal walls and distributed along said longitudinal walls of the passage. Typically a front end comprises hundreds of burner blocks aligned along the longitudinal axis, X1 , of the longitudinal walls and each loaded with an oxy-burner. Examples of burner blocks (20) suitable for the present invention are represented in Figures 4 to 6. A burner block (20) is a block of refractory material which can be incorporated in the masonry of the longitudinal walls, and which comprises a hot surface (20H) which forms part of the hot longitudinal wall surface, and a cold surface (20C) opposite to the hot surface. The cold surface is connected to the hot surface by a through-passage extending along a passage axis, Xp, and comprising:
(a) a burner portion (21B) opening at the cold surface, into which an oxy-burner can be loaded,
(b)a flame portion (20F) opening at the hot surface, and usually
(c) a joining portion (21J) fluidly joining the flame portion with the burner portion.

The flame portion and the joining portion of the burner block through-passage preferably have a geometry of revolution around the passage axis, Xp, the geometry of the cross-section normal to the passage axis, Xp, of the burner portion is not of revolution, and either is polyhedral, preferably rectangular or square, or has an overall geometry of revolution with respect to xp, comprising a protrusion or a recess.

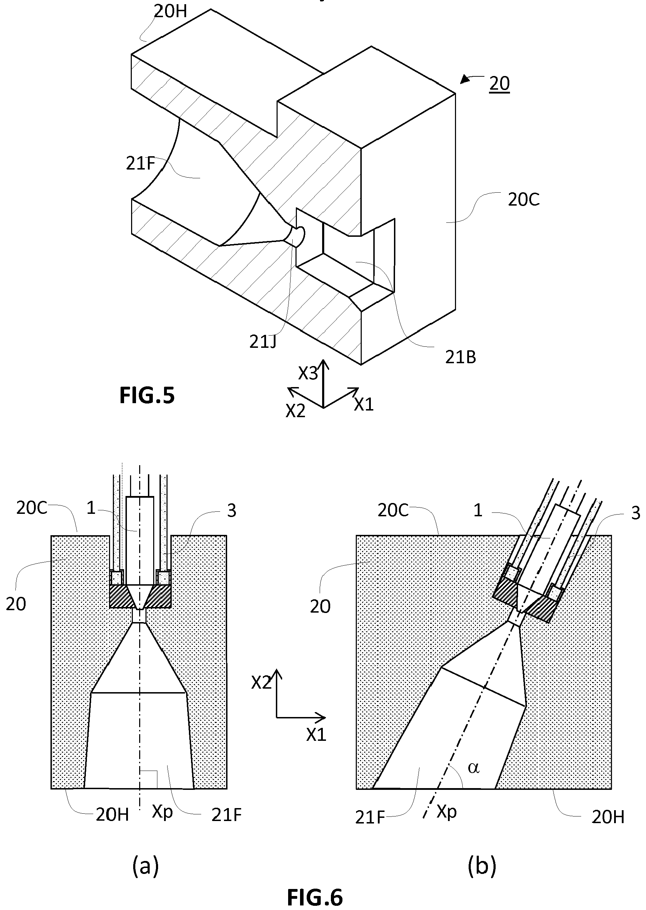

As shown in Figures 4(a) and 5, a burner block preferably comprises a hot cuboid portion comprising the hot surface, and a cold cuboid portion comprising the cold surface, wherein the cross-sectional area normal to the longitudinal axis, X1, of the hot cuboid portion is smaller than the one of the cold cuboid portion. A cuboid geometry is defined as a convex polyhedron bounded by six quadrilateral faces, whose polyhedral graph is the same as that of a cube. A cuboid bounded by six rectangular faces, with each pair of adjacent faces meeting in a right angle is herein referred to as a "*rectangular cuboid.*" This more restrictive type of cuboid is also known as a "*right cuboid.*" In other words, if not rectangular, a cuboid may for example be bounded by two or more trapezia. The hot surface of the hot cuboid portion can have a width, w, measured at service temperature, hT, of the order of 1150°C ± 150°C, along the longitudinal axis, X1.

A burner block is preferably made of a refractory material composed composed of at least 90 wt.% alumina, preferably of at least 95 wt.% alumina, more preferably of at least 99 wt.%.. The refractory material of the support block preferably comprises less than 10 wt.% silica, more preferably comprises less than 5 wt.% silica, most preferably comprises less than 2 wt.% silica. The bricks surrounding the cavity may be made of mullite, preferably of alumina enriched mullite.

As shown in the top views along a plane (X1 , X2) of Figure 6(a)&(b), the passage axis, Xp, forms an angle, α, with the longitudinal direction, X1, comprised between 30 and 90°, preferably, between 45° and 90°. In Figure 10(b), a burner block having a passage axis, Xp, forming an angle, α = 90°, is illustrated, such that the passage axis, Xp, is parallel to the first transverse direction, X2. In Figure 10(c) an alternative embodiment with an angle, α < 90°, is illustrated, the burner preferably pointing in the direction of the flow of molten glass.

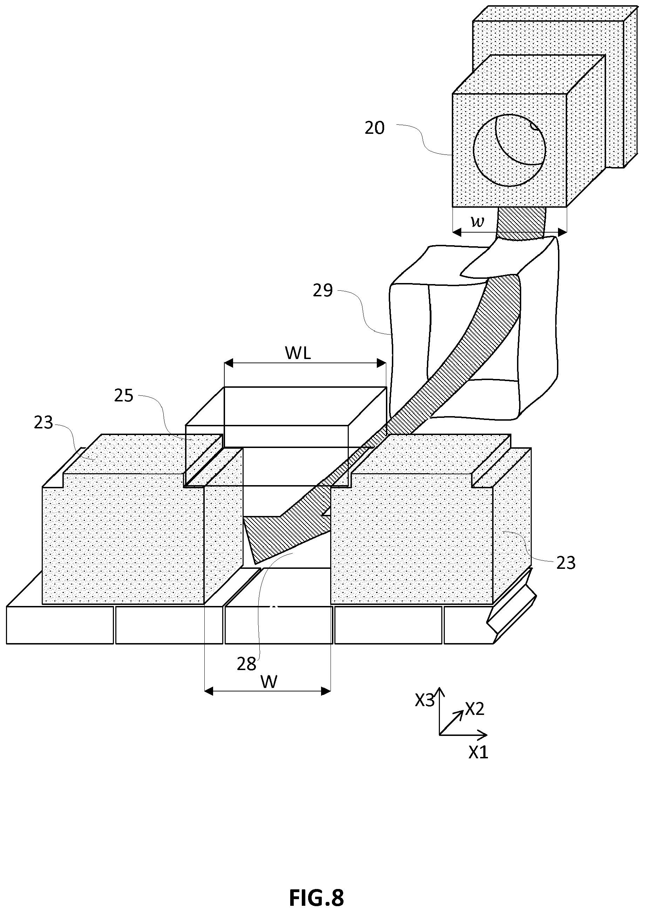

In a preferred embodiment illustrated in Figure 8, the burner block can be removed from the masonry and the same or a new burner block can be reintroduced into the cavity (28) left after withdrawal of the burner block. Because of the high service temperatures, hT, reigning in the passage, usually of the order of 1150°C ± 150°C, providing a cavity allowing the reversible insertion of a burner block is not so straightforward, because the dimensions of the cavity formed at room temperature during the building of the longitudinal wall vary substantially with the raising of the temperature to service temperature, hT, and thermal expansion of the spacer bricks (23) flanking either side of such cavities must be taken into account. A spacer element must be provided in the masonry abutting against the walls of the spacer bricks flanking each lateral side of a cavity in order to hinder the thermal expansion of the two spacer bricks, such that the distance between said two spacer bricks measured at room temperature along the longitudinal direction, X1, at the level of the hot longitudinal wall surface cannot be reduced below a predetermined hot cavity width, W, at said service temperature, hT. The predetermined hot cavity width, W, must be larger than the width, w, of the hot surface of the burner block. For example, (w + 4 mm) ≲ W ≲ (w + 8 mm)). For example, as shown in Figure 8, a spacer element can be formed by a lintel (25) of length, WL > W, resting on the recessed surfaces of a right step cut off from the two opposite top edges of each spacer brick flanking the cavity and extending in the first transverse direction, X2. Alternatively, a brick of length, W, measured at service temperature, hT, can be laid at the bottom of the cavity, the ends of the brick abutting against a wall of the flanking bricks, defining the lateral walls of the cavity (not shown) and thus hindering their thermal expansion.

Because the longitudinal walls of a front end must be substantially impervious to gases, to prevent hot air flowing out of the passage, the gap formed between the burner block and the cavity must be filled with a resilient material (29), preferably provided in the form of a fibrous sheet, which is wrapped around external surfaces of the support block. The resilient material is preferably made of refractory fibres, typically alumina fibres, or fibres comprising at least 90 wt.%, more preferably at least 95 wt.%, most preferably at least 99 wt.% alumina. The resilient fibres preferably do not comprise more than 2 wt.% silica, and more preferably comprise no silica, as silica may form an eutectic with oxides of adjacent refractory bricks, which could contaminate the glass melt by sublimation at high temperatures. An example of resilient material supplied as a sheet which is suitable for the present invention comprises ceramic fibre paper such as supplied by Morgan Thermal Ceramics.

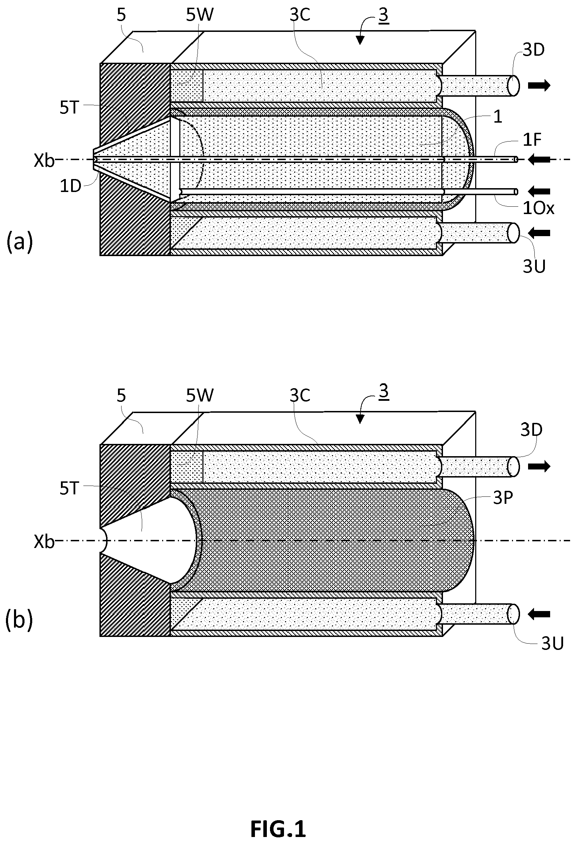

As illustrated in Figures 1(a) to 3(a), burners and, in particular, oxy-burners, comprise a body extending along the burner body axis, Xb, and comprising a downstream end ending at a free end of the downstream end, said body enclosing a fuel line (1F) and an oxygen line (lOx) separate from the fuel line, both fuel line and oxygen line having a separate outlet at or adjacent to the free end of the downstream end (1 D) of the oxy-burner, wherein a cross-sectional area normal to X1 of said downstream end of the oxy-burner body decreases towards the free end of the downstream end. The downstream end of an oxy-burner is often conical or trunco-conical.

Burners and, in particular, oxy-burners, are loaded into a burner block from the opposite side of the longitudinal walls from the passage, which defines a cold longitudinal wall surface. As discussed before, a burner can be mounted in the burner portion (21 B) of the through-passage of a burner block with the tip of the downstream end of the burner protruding slightly in the joining portion (21J). The tips of the burners are therefore exposed directly to the temperature reigning in the flame portion (21F) of the through-passage and to the service temperature, hT, reigning in the passage beyond the opening of the flame portion at the hot longitudinal wall surface. Theoretically, this is not a problem because the fuel and oxygen flowing through the body and converging at the tip of a burner act as refrigerants and cool the downstream end of the burner, protecting it from over-heating. In case, however, of a low flow rate of oxygen and/or fuel, or in case of malfunction of one of the oxygen or fuel lines (1Ox, 1F) the downstream end of a burner might not be cooled down sufficiently and the temperature thereof may raise above cracking temperature of the fuel or even above a threshold limit beyond which the burner is damaged. The present invention provides a solution to this problem, and also to the prolongation of the service life of burners.

As illustrated in Figures 1 to 3, the gist of the present invention is to provide a cooling unit (3) in thermal contact with the downstream end of the burners (1). In particular, a cooling unit (3) according to the present invention comprises:
- a cooling plate (5) made of a thermally conductive material, defined by a first and a second main surfaces separated by a thickness of said cooling plate, and an aperture extending from a large opening at the first main surface to a narrow opening to the second main surface, wherein the aperture is defined by an aperture wall which geometry matches the geometry of the downstream end of the oxy-burner to form a thermal contact therewith when the downstream end is inserted in the aperture;
- a cooling channel (3C) defined by walls and comprising an inlet (3U) and an outlet (3D) for circulating a refrigerating fluid, wherein a cooling wall (5W) of said cooling channel is formed by a portion of the cooling plate.

The refrigerating fluid can be water, air, nitrogen or any refrigerating fluid known in the art. It flows into the cooling unit at a first temperature, T1, through the inlet (3U) of the cooling channel, contacts the cooling wall (5W) whence it extracts heat from the cooling plate, and flow out of the cooling unit at a temperature, T2 > T1, through the outlet (3D) of the cooling channel.

For example, with burners having a conical or trunco-conical downstream end, the geometry of the aperture wall of the cooling plate is likely preferably trunco-conical, to match perfectly the geometry of the downstream portion and thus form an optimal thermal contact therewith. A cooling plate suitable for the present invention is preferably made of a highly thermally conductive material, such as an austenite nickel-chromium-based superalloy, for example, Inconel.

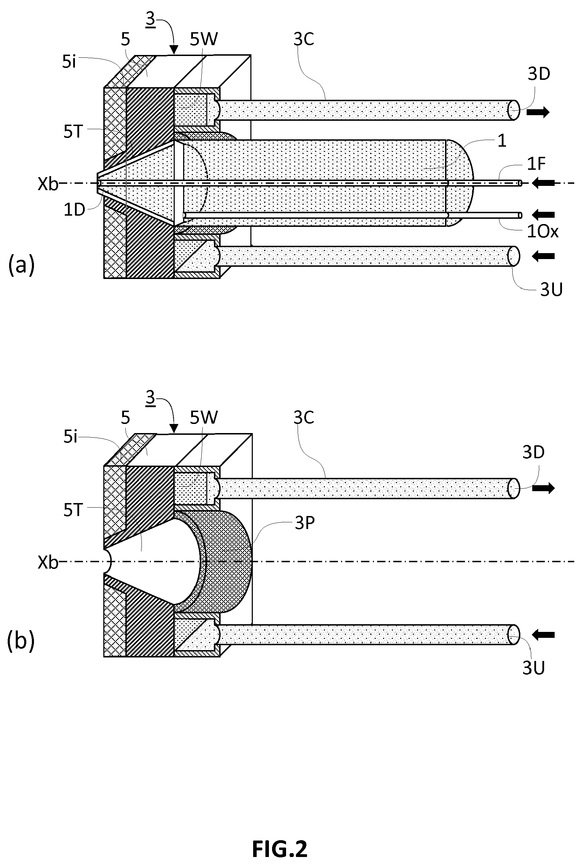

As illustrated in Figures 1&2, the cooling plate can be massive, in that it is not hollow. By sharing a wall with the cooling channel (3C), a portion of the first main surface of the cooling plate (5) forms the cooling wall (5W). Preferably the whole area of the first main surface forms the cooling wall (5W). In use, the temperature of the cooling wall (5W) is lowered by the refrigerating fluid flowing through the cooling channel (3C) and contacting said cooling wall, A temperature gradient is thus created within the cooling plate (5) between the cold surface of the cooling wall (5W) and hot surface of the second main surface of the cooling plate, which is exposed to higher temperatures than the cooling wall. In case of low or no flow of oxygen and/or fuel in the oxygen and fuel lines (1Ox, 1F) of the oxy-burner, the temperature of the downstream end of the oxy-burner will rise, thus creating a thermal gradient between the hot surface of the cavity wall and the cold surface of the cooling wall. Heat is therefore withdrawn from the hot surfaces of the second main surface and, if it applies of the cavity wall towards the cooling surface (5W) and is evacuated by the refrigerating fluid flowing out of the outlet (3D). This way, the temperature of the downstream end of the oxy-burner is ensured to remain below a threshold temperature above which gas cracking would occur or the burner tip would be degraded.

The cooling channel may comprise an annular cavity surrounding the body of the oxy-burner. A thermal contact between the cooling channel and the body of the oxy-burner is possible but not essential, since it is the downstream end of the oxy-burner which is exposed to the highest temperatures. The annular cavity portion extends along the burner body axis, Xb, from,
- an upstream end closed by an upstream wall pierced by a first and second openings bringing the cavity portion in fluid communication with the inlet and the outlet, to
- a downstream end closed by the cooling wall (5W), wherein said cooling wall surrounds the large opening of the aperture of the cooling plate.

If the passage defined by the annular cavity portion for receiving the body of the oxy-burner is contiguous with the aperture of the cooling plate, than the whole area of the first main surface of the cooling plate can form the cooling wall (5W).

One difference between the cooling units of the Figure 1 and 2 is the length of the annular cavity portion of the cooling channel: in Figure 1, the annular cavity portion extends over substantially the whole length of the oxy-burner body, whilst in Figure 2 the annular cavity portion is formed directly before the cooling wall (5W). The fluid and thermal flows characterizing the two cooling unit designs will vary depending on the dimensions of the annular cavity portion, in a manner well understood by a person skilled in the art.

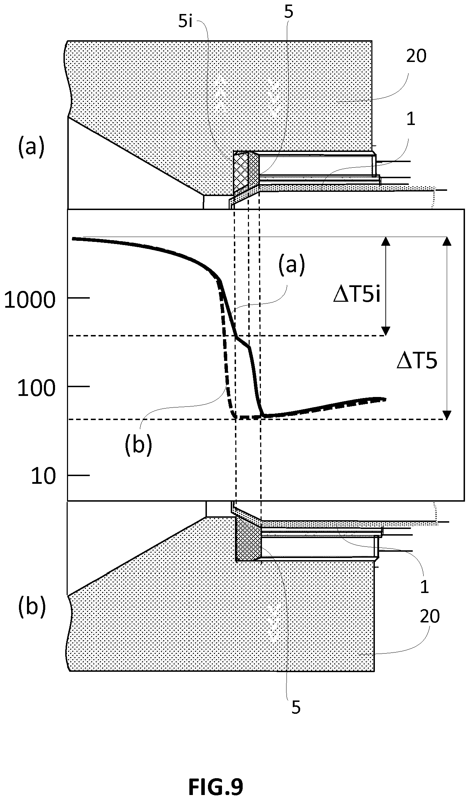

As shown in Figures 2 and 9(a), the second main surface of the cooling plate (5) can be provided with a thermally insulating layer (5i). This embodiment has the advantage to reduce the temperature gradient, ΔT5, in the refractory of the burner block, between the burner portion (21 B), which wall against which the cooling plate abuts is maintained at a low temperature (e.g., 20 to 100°C), whilst a few centimetres further, in the flame portion (21F) a temperature of the order of 2500°C can be reached (cf. Figure 9(b)). As shown in Figure 9(a), with an insulating layer (5i), the temperature of the refractory wall of the burner portion against which the cooling plate abuts can be maintained at a higher temperature of the order of 500-1000°C, thus decreasing considerably the slope of the thermal gradient, ΔT5i, in the refractory material surrounding the joining portion (21J), over a few centimetres only.

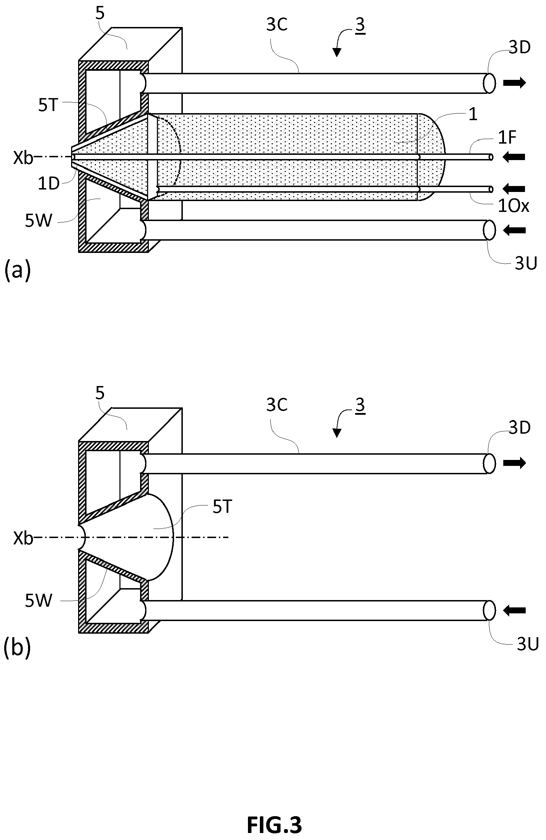

In an alternative embodiment, the cooling plate (5) is not massive but hollow, as shown in Figure 3, forming an annular cavity comprising the aperture wall defining the aperture and, at the same time, forming part of the cooling channel. The cavity is in fluid communication with both inlet and outlet to allow a flow of refrigerant fluid therethrough. The refrigerant fluid is therefore in direct contact with the cavity wall, thus enhancing the heat exchange efficacy.

The present invention concerns both an assembly comprising a sub-assembly, and a kit-of-parts, said sub-assembly and kit-of-parts comprising an oxy-burner (1) and a cooling unit (3) as defined above. In the sub-assembly, the downstream end (1 D) of the oxy-burner is in thermal contact with the aperture wall of the cooling plate (5), as shown in Figures 1 to 3. The assembly and kit-of-parts can further comprise a burner block as discussed supra to form a burner assembly. In said burner assembly, the oxy-burner sub-assembly can be encased in the burner portion (21B) of the burner block through-passage. In order to ensure a reproducible positioning of the oxy-burner with respect to the burner block, it is advantageous if the cross-section of the burner portion (21B) normal to the passage axis, xp, does not form a geometry of revolution. The cross-section can have a polygonal geometry, such as a rectangle as illustrated in Figure 5. Alternatively, the cross-section can have an overall geometry of revolution with respect to xp, comprising a protrusion or recess matching a corresponding recess or protrusion in the oxy-burner sub-assembly, for restricting to a single encasing position and for preventing rotation of the oxy-burner and oxy-burner sub-assembly about the passage axis, Xp.

In an alternative embodiment, a cooling unit can be permanently fixed in the burner portion of the burner block, e.g., with mortar, to ensure an optimal and reproducible positioning thereof. An oxy-burner can then be loaded into, or unloaded out of the thus sealed cooling unit.

As illustrated in Figure 7, a fibre manufacturing plant according to the present invention comprises a front end (31) forming a passage for conveying molten glass (30) and defined by a first and second opposite longitudinal walls (31 L), a ceiling (31T), a bottom floor (31B) and an end wall (31 E). A system of axes, X1 , X2, X3, is represented, wherein X1 is a longitudinal axis, parallel to the longitudinal walls of the passage, X2 is a first transverse axis, normal to X1, and X3 is a second transverse axis, normal to both X1 and X2.

Both longitudinal walls are provided with at least one burner assembly comprising an oxy-burner sub-assembly encased in a burner block as discussed supra, with a hot surface (20H) of the burner block forming a portion of the corresponding longitudinal walls (31L). It is clear that several burner assemblies are required in each longitudinal wall (31L) to maintain a controlled temperature in the passage, which can be several dozens of metres long. Consequently, as illustrated in Figure 7(b), each longitudinal wall comprises at least two burner assemblies aligned horizontally, the at least two burner assemblies of the first longitudinal wall preferably facing the at least two burner assemblies of the second longitudinal wall in a staggered arrangement. In practice, each longitudinal wall may comprise a hundred or more burner assemblies, facing each other in a staggered arrangement, with an angle α of the passage axis, xp, with the longitudinal axis, X1 , preferably comprised between 30 and 90°. The end wall is preferably also provided with at least one burner assembly.

The bricks adjacent to and surrounding the burner blocks preferably contain less than 5wt.% of SiO₂, more preferably less than 1 wt.% SiO₂, most preferably less than 0.2 wt.% SiO₂, or no SiO₂. For example, the adjacent bricks of the longitudinal wall may be made of alumina enriched mullite. Alternatively or additionally, a sheet of refractory non-woven fibres (29), poor in SiO₂ as discussed with respect to exchangeable burner blocks, as illustrated in Figure 8, can also be wrapped around the hot cuboid portion of traditional, non-exchangeable burner blocks to form a barrier to migration of SiO₂ from adjacent bricks. The non-woven fibres preferably comprise less than 5 wt.% SiO₂, preferably less than 1 wt.% SiO₂, more preferably less than 0.2 wt.% SiO₂, or no SiO₂. They preferably comprise substantial amounts of alumina.

The use of a cooling unit (3) as discussed supra for cooling a downstream end (1 D) of an oxy-burner (1) mounted in a front end (31) of a glass fibre manufacturing plant has several advantages. First, in case of low gas flow rates, as can be common with oxy-burners, a cracking temperature of the fuel is not reached, preventing carbon deposition at the tips of the oxy-burners. It has been observed in preliminary tests on a full scale glass fibre production line, that oxy-burners provided with a cooling unit according to the present invention required three to ten times (3 to 10 x) less frequent cleaning operations than the same oxy-burners used in the same conditions, absent a cooling unit. Second, in case of accidental interruption of the flow of the oxygen or the fuel in an oxy-burner, the downstream end (1 D) of the oxy-burner equipped with a cooling unit does not heat up above a threshold temperature which would degrade the oxy-burner. This means that the range of flow rates an oxy-burner can be used is increased, since it must not be above a certain flow rate value required for ensuring the cooling of the downstream end of the oxy-burner. Third, although oxy-burners are designed for working at relatively high temperatures (several hundreds of degrees Celsius), their service lifetime is increased when working at lower temperatures. A cooling unit according to the present invention permits to work with oxy-burners maintained at a lower temperature. Fourth, the handling of a thus cooled oxy-burner mounted in a burner block by an operator is facilitated if the temperature of the oxy-burner body is lower as allowed by the cooling unit.

| **REF** | **DESCRIPTION** |
|---|---|
| 1 | oxy-burner |
| 1D | downstream end of oxy-burner |
| 1F | fuel line |
| 1Ox | Oxygen line |
| 3 | cooling unit |
| 3C | cooling channel |
| 3D | outlet of cooling channel |
| 3U | inlet of cooling channel |
| 5 | cooling plate |
| 5T | trunco-conical aperture |
| 5W | cooling wall |
| 20 | burner block |
| 20C | cold surface of burner block |
| 20H | hot surface of burner block |
| 21B | burner portion of through-passage |
| 21F | flame portion of through-passage |
| 21J | joining portion of through-passage |
| 23 | Spacer brick |
| 25 | Lintel |
| 28 | Cavity |
| 29 | Resilient material |
| 30 | molten glass |
| 31 | passage |
| 31B | passage bottom floor |
| 31E | passage end wall |
| 31L | passage longitudinal wall |
| 31T | passage ceiling |
| X1 | Longitudinal axis |
| X2 | First transverse axis, normal to X1 and X3 |
| X3 | Second transverse axis, normal to X1 and X2 |
| Xb | Burner body axis |
| Xp | Passage axis |

## Claims

1. A kit of parts comprising:
(a) An oxy-burner (1) comprising a body extending along a burner body axis, Xb, and comprising a downstream end ending at a free end of the downstream end, said body enclosing a fuel line (1F) and an oxygen line (lOx) separate from the fuel line, both fuel line and oxygen line having a separate outlet at or adjacent to the free end of the downstream end (1 D) of the oxy-burner, wherein a cross-sectional area normal to Xb of said downstream end of the oxy-burner body decreases towards the free end of the downstream end;
(b) A cooling unit (3) comprising:
• a cooling plate (5) made of a thermally conductive material, defined by a first and a second main surfaces separated by a thickness of said cooling plate, and an aperture extending from a large opening at the first main surface to a narrow opening to the second main surface, wherein the aperture is defined by an aperture wall which geometry matches the geometry of the downstream end of the oxy-burner to form a thermal contact therewith when the downstream end is inserted in the aperture;
• a cooling channel (3C) defined by walls and comprising an inlet (3U) and an outlet (3D) for circulating a refrigerating fluid, wherein a cooling wall (5W) of said cooling channel is formed by a portion of the cooling plate.

2. A kit of parts according to claim 1, wherein the cooling plate is massive and the cooling wall is formed by a portion of the first main surface.

3. A kit of parts according to claim 2, wherein the cooling channel comprises an annular cavity portion extending along the burner body axis, Xb, from
• an upstream end closed by an upstream wall pierced by a first and second openings bringing the cavity portion in fluid communication with the inlet and the outlet, to
• a downstream end closed by the cooling wall, wherein said cooling wall surrounds the large opening of the aperture of the cooling plate.

4. A kit of parts according to claim 3, wherein the annular cavity portion defines a prismatic passage (3P), which extends along the burner body axis, Xb, and is contiguous with the aperture of the cooling plate, said prismatic passage being so dimensioned as to accommodate a portion of the body of the oxy-burner, with the downstream end of the oxy-burner in thermal contact with the aperture wall of the cooling plate.

5. A kit of parts according to claim 1, wherein the cooling plate is hollow, forming a cavity surrounding the aperture and forming part of the cooling channel, said cavity being in fluid communication with both inlet and outlet.

6. Kit of parts according to any of the preceding claims, wherein the cooling plate is made of an austenite nickel-chromium-based superalloy, preferably inconel.

7. Kit of parts according to any of the preceding claims, further comprising a burner block (20) made of a refractory material and comprising a cold surface (20C) and a hot surface (20H) opposite the cold surface, the cold surface being fluidly connected to the hot surface by a through-passage extending along a passage axis, Xp, and comprising three portions:
(a) A burner portion (21 B), opening at the cold surface, and having a prismatic geometry of cross-section suitable for accommodating the cooling unit (3) with the oxy-burner's downstream end inserted in the aperture of the cooling plate;
(b)A flame portion (21 F), opening at the hot surface and converging along the passage axis, Xp; in the direction of the cold surface until meeting
(c) A joining portion (21J), fluidly joining the flame portion to the burner portion

8. Kit of parts according to claim 7, wherein the burner block is made of a refractory material composed of at least 90 wt.% alumina, preferably of at least 95 wt.% alumina, more preferably of at least 99 wt.%.

9. Kit of parts according to claim 7 or 8, wherein the burner block comprises a hot cuboid portion comprising the hot surface, and a cold cuboid portion comprising the cold surface, wherein the cross-sectional area normal to the passage axis, Xp, of the hot cuboid portion is smaller than the one of the cold cuboid portion.

10. Kit of parts according to any of claims 7 to 9, wherein the flame portion and the joining portion of the burner block through-passage have a geometry of revolution around the passage axis, Xp, whilst the geometry of the cross-section normal to the passage axis, Xp, of the burner portion is not of revolution, and either is polyhedral, preferably rectangular or square, or has an overall geometry of revolution with respect to xp, comprising a protrusion or a recess.

11. Burner assembly comprising an oxy-burner sub-assembly consisting of an oxy-burner (1) as defined in claim 1(a), and a cooling unit (3) as defined in claim 1(b), wherein the downstream end (1 D) of the oxy-burner is in thermal contact with the aperture wall of the cooling plate (5).

12. Burner assembly according to claim 11, further comprising a burner block (20) as defined in claim 7, with the oxy-burner sub-assembly being encased in the burner portion (21B) of the burner block through-passage.

13. Glass fibre manufacturing plant comprising a front end (31) forming a passage for conveying molten glass (30) and defined by a first and second opposite longitudinal walls (31 L), a ceiling (31T), a bottom floor (31B) and an end wall (31 E), each longitudinal wall being provided with at least one burner assembly according to claim 12, with the hot surface (20H) of the burner block forming a portion of the corresponding longitudinal walls (31 L).

14. Glass fibre manufacturing plant according to claim 13, wherein each longitudinal wall comprises at least two burner assemblies aligned horizontally, the at least two burner assemblies of the first longitudinal wall facing the at least two burner assemblies of the second longitudinal wall in a staggered arrangement, the end wall being preferably also provided with a burner assembly according to claims 12.

15. Use of a cooling unit (3) as defined in claim 1 (b) for cooling a downstream end (1 D) of an oxy-burner (1) mounted in a front end (31) of a glass fibre manufacturing plant.
